# EUROPEAN PATENT APPLICATION

(11) **EP 3 118 795 A1**
(43) Date of publication of application: **18.01.2017**
(21) Application number: 16179271.8
(22) Date of filing: 13.07.2016
(51) Int. Cl.: G06Q 20/20, G06Q 20/04

(54) **CHECK-OUT APPARATUS AND CONTROL PROGRAM THEREOF**

(30) Priority: 17.07.2015 JP 2015143393
(71) Applicant: Toshiba TEC Kabushiki Kaisha, Tokyo 141-0032 (JP)
(72) Inventor: NIMIYA, Shigeki, Shinagawa-ku, Tokyo 141-8562 (JP); NAMBU, Kazuya, Shinagawa-ku, Tokyo 141-8562 (JP)
(74) Representative: Takeuchi, Maya

(57) **Abstract**

A check-out apparatus is disclosed in an embodiment. The apparatus generates payment information including a payment amount required for a transaction based on one or more received merchandise codes. The apparatus acquires a user code corresponding to a user of an electronic receipt service. The apparatus performs a payment process based on the payment information and input received from a customer, and generates receipt information including a list of the merchandise purchased in the transaction and information regarding the payment process. If the user code is not acquired, the printer prints a receipt sheet based on the receipt information. If the user code is acquired, the apparatus transmits the user code and the receipt information to the electronic receipt management server which stores the receipt information in association with the user code.

## Description

### FIELD

Embodiments described herein relate generally to a check-out apparatus and a control program thereof.

### BACKGROUND

Generally, a self-service check-out apparatus is already known as, for example, a self POS terminal, or the like. In the check-out apparatus of this type, a shopper performs each of the various operations for the transaction such as purchase registration, designation of a payment method, and input of payment information in principal. Here, the designation of a payment method is to designate which payment type out of cash, credit cards, and electronic money the shopper uses. The input of payment information refers to, for example, an operation of inserting cash into a cash input slot in a case of cash payment, or an operation of inserting a credit card into a card insertion port and inputting a personal identification number in a case of credit card payment.

Recently, an electronic receipt service may also be provided. However, many customers may prefer a receipt to be issued using a receipt sheet as before. Therefore, in the check-out apparatus, a receipt is issued using a receipt sheet by default, and if the shopper performs operations for using the electronic receipt service, a process for using the electronic receipt service is performed.

Thus, a shopper who wants to use the electronic receipt service has to also perform operations for using the electronic receipt service, in addition to the various operations described above. Therefore, the shopper is burdened by the required operations, and may forget to also do the operations for using the electronic receipt service. In this case, even if the shopper desires to use the electronic receipt service, a receipt using a receipt sheet is issued.

Even if the check-out apparatus is operated by a salesperson in a store or the like, similar problems may occur due to lack of awareness or negligence of the salesperson.

Under such circumstances, it is desired to prevent the operator from forgetting to perform an operation for using an electronic receipt service.

To achieve such objects, there is provided a check-out apparatus comprising:
a storage unit;
an input unit configured to receive a merchandise code corresponding to merchandise to be purchased in a transaction;
a printer configured to print a receipt;
a communication interface in communication with an electronic receipt management sever; and
a processor, wherein the processor controls the storage unit, the input unit, the printer and the communication interface to perform the following functions:
   generate payment information including a payment amount required for the transaction based on one or more received merchandise codes,
   acquire a user code corresponding to a user of an electronic receipt service, perform a payment process based on the payment information and input
received from a customer,
   generate receipt information including a list of the merchandise purchased in the transaction and information regarding the payment process,
   if the user code is not acquired, print a receipt sheet based on the receipt information, and
   if the user code is acquired, transmit the user code and the receipt information to the electronic receipt management server which stores the receipt information in association with the user code.

Preferably, the apparatus further comprises a display unit configured to display a screen that instructs the user to input the user code.

Preferably still, the display unit is configured to not display the screen that instructs the user to input the user code when the user code has been acquired.

Preferably yet, the display unit is configured to display a screen that informs the user that the receipt sheet will not be printed when the user code has been acquired.

Suitably, the screen is displayed while a registration process of acquiring one or more merchandise codes is ongoing.

Suitably still, the printer does not print the receipt sheet if the user code is acquired.

Suitably yet, the apparatus further comprises a display unit configured to display a screen that instructs the user to contact the electronic receipt service in communication with the electronic receipt management server to obtain details regarding the transaction.

The invention also relates to a transaction check-out method comprising the steps of:
receiving at least one merchandise code corresponding to merchandise to be purchased in a transaction;
generating payment information including a payment amount required for the transaction based on the at least one received merchandise code,
performing a payment process based on the payment information and input received from a customer;
determining whether a user code corresponding to a user of an electronic receipt service is acquired;
generating receipt information including a list of the merchandise purchased in the transaction and information regarding the payment process;
controlling distribution of the receipt information to the customer so that:
   if the user code is not acquired, a receipt sheet is printed based on the receipt information, and
   if the user code is acquired, the user code and the receipt information are transmitted to an electronic receipt management server which stores the receipt information in association with the user code.

Preferably, the method further comprises the step of:
determining whether to display a screen that instructs the user to input the user code based on whether the user code has been acquired.

Preferably still, the screen that instructs the user to input the user code is not displayed when the user code has been acquired.

Preferably yet, the method further comprises the step of:
determining whether to display content that informs the user that the receipt sheet will not be printed based on whether the user code has been acquired.

Suitably, the screen is displayed while a registration process of acquiring one or more merchandise codes is ongoing.

The receipt sheet may not be printed if the user code is acquired.

Suitably yet, the method further comprises the step of:
if the receipt information is transmitted to the electronic receipt management server, displaying a screen that instructs the user to contact an electronic receipt service in communication with the electronic receipt management server to obtain details regarding the transaction.

The invention further concerns a non-transitory computer readable medium containing computer-executable instructions adapted to cause the computer system to perform a transaction check-out method mentioned above.

The invention is also concerned with a computer system comprising a storage means;
an input means configured to receive a merchandise code corresponding to merchandise to be purchased in a transaction;
a printer means configured to print a receipt;
a communication interface means in communication with an electronic receipt management sever; and
a processor means, wherein the processor means controls the storage means, the input means, the printer means and the communication interface means to perform the following functions:
generate payment information including a payment amount required for the transaction based on one or more received merchandise codes,
acquire a user code corresponding to a user of an electronic receipt service, perform a payment process based on the payment information and input received from a customer,
generate receipt information including a list of the merchandise purchased in the transaction and information regarding the payment process,
if the user code is not acquired, print a receipt sheet based on the receipt information, and
if the user code is acquired, transmit the user code and the receipt information to the electronic receipt management server which stores the receipt information in association with the user code.

### DESCRIPTION OF THE DRAWINGS

The above and other objects, features and advantages of the present invention will be made apparent from the following description of the preferred embodiments, given as nonlimiting examples, with reference to the accompanying drawings, in which:
FIG. 1 is a block diagram illustrating an example configuration of a check-out apparatus according to an embodiment.
FIGS. 2-4 are flow charts of an example sequence of operations for a control process of the check-out apparatus.
FIG. 5 is a diagram illustrating an example registration screen before acquisition of a user code.
FIG. 6 is a diagram illustrating an example registration screen after acquisition of the user code.
FIG. 7 is a diagram illustrating an example first selection screen.
FIG. 8 is a diagram illustrating an example second selection screen.
FIG. 9 is a diagram illustrating an example first end screen.
FIG. 10 is a diagram illustrating an example second end screen.
FIG. 11 is a flow chart of an example sequence of operations for the control process of the check-out apparatus.

### DETAILED DESCRIPTION

A check-out apparatus, or the corresponding computer system, according to an embodiment includes a storage unit, an input unit that receives a merchandise code corresponding to merchandise to be purchased in a transaction, a printer, a communication interface in communication with an electronic receipt management sever, and a processor. The processor controls the storage unit, the input unit, the printer and the communication interface to generate payment information including a payment amount required for the transaction based on one or more received merchandise codes, acquire a user code corresponding to a user of an electronic receipt service, perform a payment process based on the payment information and input received from a customer, and generate receipt information including a list of the merchandise purchased in the transaction and information regarding the payment process. If the user code is not acquired, the printer prints a receipt sheet based on the receipt information. If the user code is acquired, the apparatus transmits the user code and the receipt information to the electronic receipt management server which stores the receipt information in association with the user code.

Hereinafter, an example of an embodiment will be described with reference to the drawings.

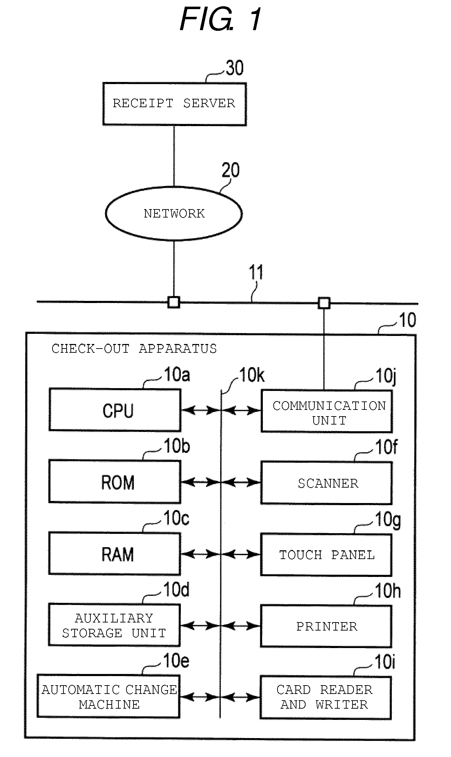

FIG. 1 is a block diagram illustrating an example configuration of a check-out apparatus 10 according to an embodiment.

The check-out apparatus 10 is provided in, for example, a check-out area of a store such as a supermarket. The operator of the check-out apparatus 10 is a shopper who purchases merchandise which is sold at the store. However, the salesperson of the store may operate the check-out apparatus 10 in some cases.

The check-out apparatus 10 is connected to a local area network (LAN) 11 provided in the store. A store server, not illustrated, is connected to the LAN 11. In the case that a plurality of check-out apparatuses 10 are provided in the store, the other check-out apparatuses 10 are also connected to the LAN 11. Further, the LAN 11 is connected to a network 20. A receipt server 30 is connected to the network 20.

The network 20 is typically the Internet. The network 20 may be other types of communication networks such as a dedicated line network.

The receipt server 30 performs various well-known processes for providing an electronic receipt service. The processes that the receipt server 30 performs includes collecting electronic receipt data from the check-out apparatus 10, associating the collected electronic receipt data with a user code, and a process of providing the electronic receipt data for display on a display terminal. Therefore, the receipt server 30 is an example of a management apparatus.

The check-out apparatus 10 includes a central processing unit (CPU) 10a, a read only memory (ROM) 10b, a random access memory (RAM) 10c, an auxiliary storage unit 10d, an automatic change machine 10e, a scanner 10f, a touch panel 10g, a printer 10h, a card reader and writer 10i, a communication unit 10j, and a transmission system 11k.

The CPU 10a, the ROM 10b, the RAM 10c and the auxiliary storage unit 10d are connected by the transmission system 11k and may be provided as a computer.

The CPU 10a corresponds to the central processor of the computer. The CPU 10a controls respective units in order to realize various types of operations as the check-out apparatus 10, based on the operating system, the middleware, and/or the application programs, which are stored in the ROM 10b and the RAM 10c.

The ROM 10b corresponds to the main memory storage of the computer. The ROM 10b stores the operating system. The ROM 10b may store the middleware and application programs in some cases. Further, the ROM 10b may also store data that is referred to when the CPU 10a performs various processes.

The RAM 10c corresponds to the main working memory of the computer. The RAM 10c stores data that is referred to when the CPU 10a performs various processes. Further, the RAM 10c is utilized as a so-called work area for storing data that is temporarily used when the CPU 10a performs various processes.

The auxiliary storage unit 10d corresponds to the auxiliary storage of the computer. The auxiliary storage unit 10d stores data that is used or generated when the CPU 10a performs various processes. As the auxiliary storage unit 10d, for example, an electric erasable programmable read only memory (EEPROM), a hard disk drive (HDD), a solid state drive (SSD), or the like may be used.

The application program stored in the ROM 10b or the auxiliary storage unit 10d includes a control program for implementing a control process to be described later. The transport and installation of the check-out apparatus 10 is generally performed in the state where the control program is stored in the ROM 10b or the auxiliary storage unit 10d. However, the check-out apparatus 10 may be installed in the state where the control program is not stored in the ROM 10b or the auxiliary storage unit 10d, and the control program may be transferred from a removable recording medium or through a network. In this case, for example, the control program is written into the auxiliary storage unit 10d of the check-out apparatus 10 in response to the operation of the user. As the removable recording medium, a magnetic disk, a magneto-optical disk, an optical disk, a semiconductor memory, or the like may be used.

The automatic change machine 10e collects coins and bills that are input. Further, the automatic change machine 10e discharges the coins and bills as change.

The scanner 10f obtains the merchandise code of the merchandise. As the scanner 10f, various known types of scanners can be used as they are. The scanner 10f may be implemented as only one of various known types, or may be implemented as a plurality of types. In other words, the scanner 10f may be a two-dimensional code scanner of a fixed type or a hand-held type. The scanner 10f may be a scanner that identifies merchandise from the image of merchandise, by using an image recognition technique.

The touch panel 10g includes a display device and a touch sensor, respectively. The display device may display a certain screen such as a graphical user interface (GUI) screen. As the display device, for example, a known device such as a color LCD may be used. The touch sensor is arranged to overlap the display surface of the display device. The touch sensor detects the operator's touch position on the display surface of the display device, and sends the position information to the CPU 10a. As the touch sensor, a known device may be used.

The printer 10h is, for example, a thermal printer, a dot impact printer, or the like, and issues a receipt by printing various characters and/or images on a receipt sheet.

The card reader and writer 10i reads data recorded on the card, and writes data into the card. The card reader and writer 10i may read various types of cards having information about a payment process recorded thereon, such as a membership card and a point card, in addition to payment cards such as a credit card, a debit card, an electronic money card, and a prepaid card. The card reader and writer 10i may be a magnetic, contact, and/or contactless type of card reader/writer device, and may include a plurality of such types of card reader/writer devices.

The communication unit 10j performs communication through the LAN 11.

The transmission system 11k transmits data pieces which are exchanged between the CPU 10a, the ROM 10b, the RAM 10c, the auxiliary storage unit 10d, a drawer open unit 11e, the scanner 10f, the touch panel 10g, the printer 10h, the card reader and writer 10i, and the communication unit 10i. As the transmission system 11k, a system including various buses such as a system bus and various interface circuits connecting the buses and respective units may be used.

Next, the operation of the check-out apparatus 10 configured as described above will be described. Incidentally, the content of the processing to be described below is an example, and various processes capable of achieving the same results can be appropriately utilized.

If the check-out apparatus 10 is activated in a mode in which the registration process of purchase merchandise is performed, the CPU 10a starts a control process according to the control program stored in the ROM 10b or the auxiliary storage unit 10d.

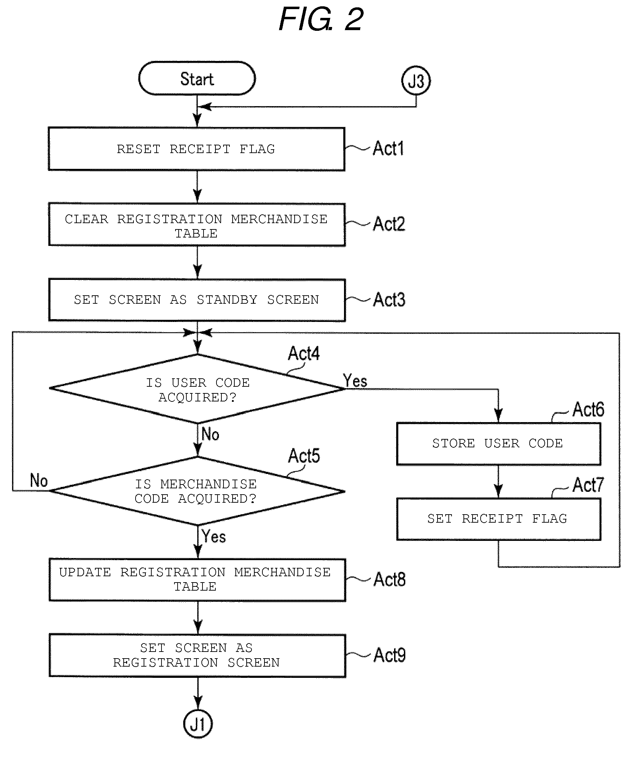

FIGS. 2-4 are flow charts of an example sequence of operations for performing the control process of the CPU 10a.

In Act 1, the CPU 10a resets a receipt flag. The receipt flag indicates a setting for whether or not to use the electronic receipt service, depending on the receipt flag setting. The receipt flag is, for example, one bit of data stored in the RAM 10c.

In Act 2, the CPU 10a clears a registration merchandise table that is stored in the RAM 10c. The registration merchandise table is a data table that includes information about the merchandise for which purchase registration is completed.

In Act 3, the CPU 10a sets an area of a screen on the touch panel 10g as a standby screen. The standby screen is indicates that it is possible to start the purchase registration for a new transaction. The form and content of the information that is indicated may be arbitrary.

In Act 4, the CPU 10a checks whether or not a user code for identifying the user of the electronic receipt service is acquired. If it is determined that the user code is not acquired (NO in Act 4), the CPU 10a proceeds to Act 5.

In Act 5, the CPU 10a checks whether or not the merchandise code of merchandise to be subject to purchase registration is acquired. If the merchandise code is not acquired (NO in Act 5), the CPU 10a returns to Act 4.

Thus, in Act 4 and Act 5, the CPU 10a waits for the acquisition of the user code, or the acquisition of the merchandise code. In addition, the CPU 10a may check for the occurrence of other events such as execution of other operations, in the standby state, and proceed to the process according to the occurred event.

The shopper stands in front of the check-out apparatus 10 with merchandise intended to be purchased. If the shopper wants the electronic receipt service to be used with respect to this transaction, for example, the shopper scans the screen of the shopper's own smartphone over the scanner 10f, while the smartphone displays a membership card screen including a bar code that represents the user code.
Thus, the scanner 10f reads the bar code. In this case, the CPU 10a makes a determination of Yes in Act 4, and proceeds to Act 6.
In Act 6, the CPU 10a stores the user code represented by the bar code that is read by the scanner 10f, into the RAM 10c or the auxiliary storage unit 10d. In this manner, the computer is controlled by the CPU 10a based on the control program to function as the acquisition unit.

In Act 7, the CPU 10a sets the receipt flag. Thereafter, the CPU 10a returns to the standby state of Act 4 and Act 5.

The CPU 10a acquires the merchandise code based on the operation by the shopper through the well-known processes other than the control process illustrated in FIG. 2 to FIG. 4. If Yes is determined in Act 5 because the merchandise code is acquired in the standby state of Act 4 and Act 5 illustrated in FIG. 2, the CPU 10a proceeds to Act 8.

In Act 8, the CPU 10a updates the registration merchandise table to include the acquired merchandise code.

In Act 9, the CPU 10a sets some region of the screen of the touch panel 10g as a registration screen. The registration screen displays the contents of the registration merchandise table and is intended to allow the shopper to check the status of the registration process. The CPU 10a changes the registration screen depending on a state of the receipt flag.

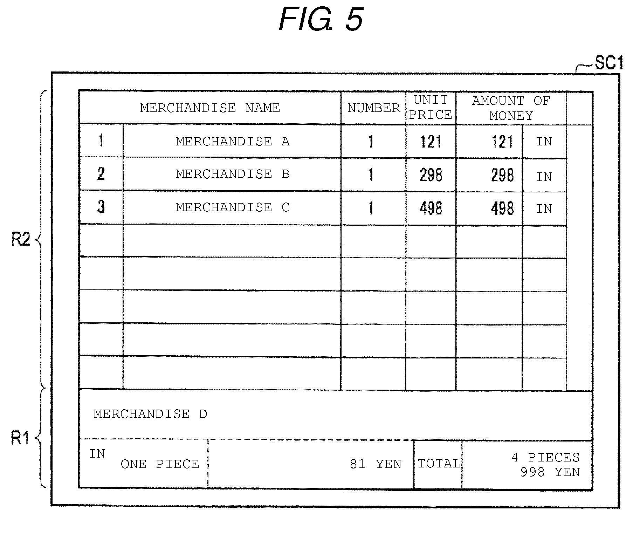

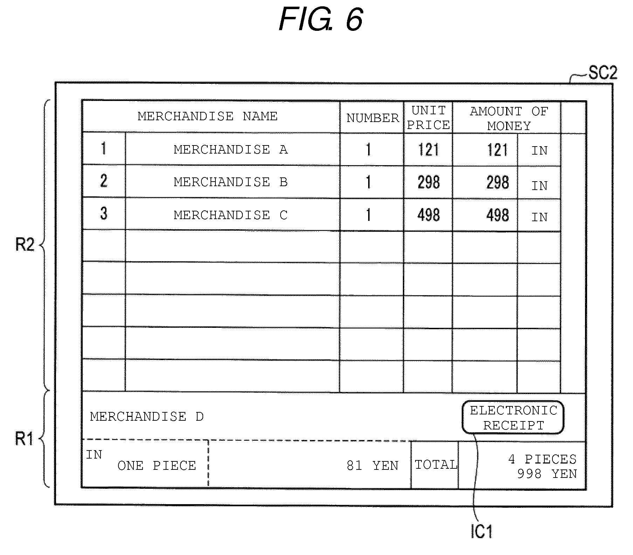

FIG. 5 is a diagram illustrating an example registration screen SC1 displayed before acquisition of a user code. FIG. 6 is a diagram illustrating an example registration screen SC2 displayed after the acquisition of the user code.

Before the user code is acquired, in other words, in a state where the receipt flag is not set, the CPU 10a sets a screen such as the registration screen SC1. After the user code is acquired, in other words, in a state where the receipt flag is set, the CPU 10a sets a screen such as the registration screen SC2.

Both registration screens SC1 and SC2 include regions R1 and R2. The registration screen SC2 further includes an icon IC1.

The region R1 is a region for representing the merchandise name, the number, and the unit price of the merchandise most recently registered, and the total number and the total amount of money of the purchase merchandise after the merchandise is registered. The region R2 is a region for representing the list of merchandise names, the numbers, the unit prices, and the amounts of money of the merchandise that was registered earlier than the merchandise displayed on the registration screen SC1. The Icon IC1 represents a setting in which the electronic receipt service is used.

Incidentally, the registration screens SC1 and SC2 and the corresponding regions R1 and R2 display various types of information about a plurality of merchandise for which purchase registration is made. However, when the CPU 10a proceeds to Act9, the registration merchandise table includes only information regarding one of the merchandise. Therefore, on the registration screen, the information about the merchandise is represented in the region R1, and is not represented in the region R2.

The CPU 10a controls the touch panel 10g to display various functional buttons such as a merchandise button by which the salesperson designates merchandise and a subtotal button, in a region other than the regions R1 and R2.

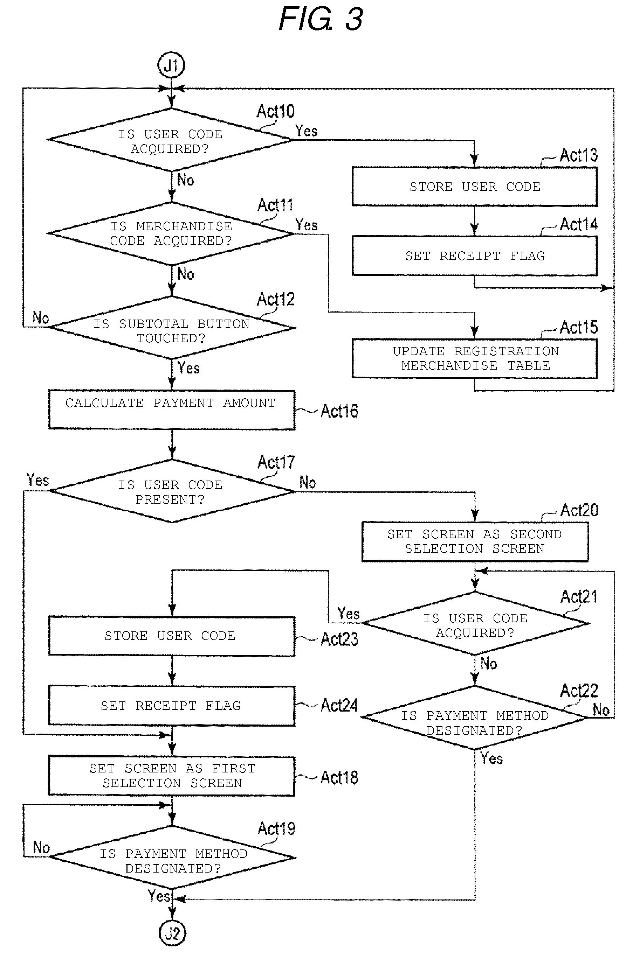

In Act 10 of FIG. 3, the CPU 10a checks whether or not the user code is acquired. If the user code is not acquired (NO in Act 10), the CPU 10a proceeds to Act 11.

In Act 11, the CPU 10a checks whether or not the merchandise code of merchandise to be subject to purchase registration is acquired. If the merchandise code is not acquired (NO in Act 11), the CPU 10a proceeds to Act 12.

In Act 12, the CPU 10a checks whether or not the subtotal button that is displayed on the screen of the touch panel 10g is touched. If the operation is not performed (NO in Act 12), the CPU 10a returns to Act 10.

Thus, in Act 10 through Act 12, the CPU 10a waits for the acquisition of the user code, the acquisition of a new merchandise code, or the touch of the subtotal button. In addition, the CPU 10a may check for the occurrence of other events such as execution of other operations, in the standby state, and proceed to the process according to the occurred event.

The shopper may scan a screen of his own smartphone over the scanner 10f, in a state of displaying a membership card screen on the smartphone, until the subtotal button is touched. Thus, the scanner 10f reads the bar code so that the user code is acquired. The CPU 10a makes a determination of Yes in Act 10 in this case, and proceeds to Act 13.

In Act 13, the CPU 10a stores the user code represented by the bar code that is read by the scanner 10f, into the RAM 10c or the auxiliary storage unit 10d.

In Act 14, the CPU 10a sets the receipt flag. Thereafter, the CPU 10a returns to the standby state of Act 10 through Act 12. In response thereto, the CPU 10a updates the registration screen to include icon IC1.

Meanwhile, if Yes is determined in Act 11 because the merchandise code is acquired in the manner similar to that described above, the CPU 10a proceeds to Act 15.

In Act 15, the CPU 10a updates the registration merchandise table to include the acquired merchandise code. In response thereto, the CPU 10a updates the registration screen to conform to the contents of the updated registration merchandise table. Thereafter, the CPU 10a returns to the standby state of Act 10 through Act 12. The registration merchandise table, generated in this way, represents a list of purchase merchandise. In this manner, the computer is controlled by the CPU 10a based on the control program to function as a first generation unit.

Then, when the registration of all of merchandise for one transaction is completed, the shopper touches the subtotal button on the touch panel 10g. If the touch of the subtotal button is detected by the touch panel (YES in Act 12), the CPU 10a proceeds to Act 16.

In Act 16, the CPU 10a calculates the payment amount. Specifically, the CPU 10a calculates, for example, the payment amount as the total amount of money for the purchase merchandise indicated on the merchandise list. In this manner, the computer is controlled by the CPU 10a based on the control program to function as a calculation unit.

In Act 17, the CPU 10a checks whether or not the user code is stored in the RAM 10c or the auxiliary storage unit 10d. If the user code is present (YES in Act 17), the CPU 10a proceeds to Act 18.

In Act 18, the CPU 10a sets the screen on the touch panel 10g as a first selection screen. The first selection screen is a GUI screen for designating a payment method.

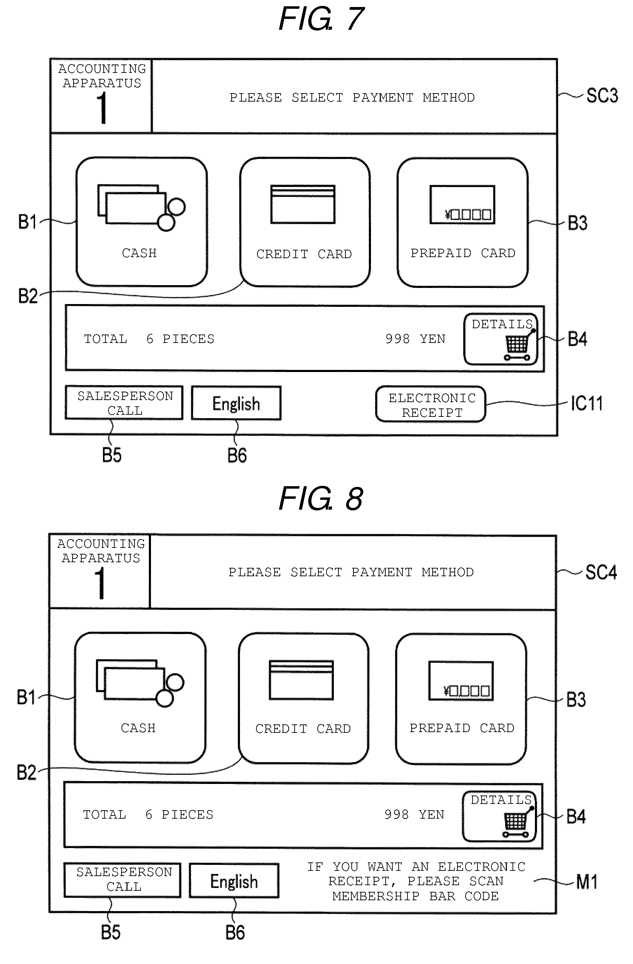

FIG. 7 is a diagram illustrating a first selection screen SC3 as an example.

The first selection screen SC3 includes six buttons B1, B2, B3, B4, B5, and B6 which may be touched by the operator for various operations. The first selection screen SC3 also includes an icon IC 11. Cash payment, credit card payment, and prepaid card payment are allocated respectively to the buttons B1 to B3. Salesperson call and language switching are allocated respectively to the buttons B5 and B6. The icon IC11 represents the setting of using the electronic receipt service. In this manner, the computer and the touch panel 10g are controlled by the CPU 10a based on the control program to function as the notification unit that notifies the acquisition of the user code.

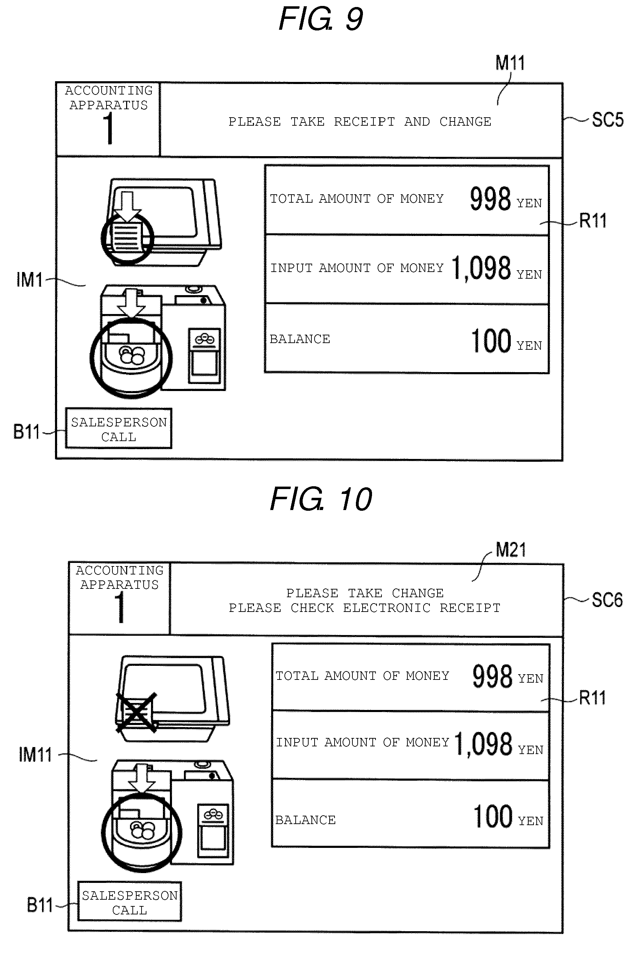

In Act 19, the CPU 10a checks whether or not a payment method is designated. If the operation of designating a payment method is not performed (NO in Act 19), the CPU 10a repeats Act 19. Thus, in Act 19, the CPU 10a waits for the designation of the payment method. Incidentally, although not illustrated, the CPU 10a also waits for the execution of an operation other than the operation of designating a payment method in the standby state. If such an operation is performed, the CPU 10a proceeds to a process (not illustrated) corresponding to the performed operation. For example, if the touch on the button B5 is detected by the touch panel 10g, the CPU 10a proceeds to a process for causing a calling operation in a monitoring terminal, not illustrated in FIG. 10. Further, for example, if the touch on the button B6 is detected by the touch panel 10g, the CPU 10a proceeds to a process for displaying the text in English (or other indicated language) on the screen of the touch panel 10g.

Meanwhile, if there is no corresponding user code (No in Act 17), the CPU 10a proceeds to Act 20.

In Act 20, the CPU 10a sets the screen on the touch panel 10g as a second selection screen. The second selecting screen is a GUI screen for designating a payment method.

FIG. 8 is a diagram illustrating an example second selection screen SC4. Incidentally, in FIG. 8, since the same reference numerals are given to the same elements as those in FIG. 7, a detailed description thereof will be omitted.

The second selection screen SC4 includes six buttons B1, B2, B3, B4, B5, and B6 which may be touched by the operator for various types of operations. The second selection screen SC4 also includes text message M1. In other words, the second selection screen SC4 is a screen obtained by removing the icon IC11 from the first selection screen SC3 and adding the text message M1. The text message M1 instructs the shopper to scan a bar code representing the user code over the scanner 10f, in order to use the electronic receipt service.

In Act 21, the CPU 10a checks whether or not the user code is acquired. If the user code is not acquired (No in Act 21), the CPU 10a proceeds to Act 22.

In Act 22, the CPU 10a checks whether or not a payment method is designated. If the operation of designating a payment method is not performed (No in Act 22), the CPU 10a returns to Act 21.

Thus, in Act 21 and Act 22, the CPU 10a waits for the acquisition of the user code, or the designation of a payment method. Incidentally, although not illustrated, in the standby state, the CPU 10a also waits for the execution of other operations in the same process as that performed in the standby state of Act 19.

If the shopper wants to use the electronic receipt service, the shopper scans the bar code displayed on the screen of his own smartphone over the scanner 10f, according to the text message M1. Thus, the scanner 10f reads the bar code and the user code is acquired. Thus, setting the screen on the touch panel 10g as the second selection screen corresponds to a guide operation of guiding the operator to cause the second acquisition unit to acquire the user code. Accordingly, the touch panel 10g corresponds to a guide device. In this manner, the computer and the touch panel 10g are controlled by the CPU 10a based on the control program to function as a guide control unit. The function as the guide unit is implemented by the cooperation of the CPU 10a and the touch panel 10g. The CPU 10a makes a determination of Yes in Act 21 if the bar code is read by the scanner 10f, and proceeds to Act 23.

In Act 23, the CPU 10a stores the user code represented by the bar code that is read by the scanner 10f, into the RAM 10c or the auxiliary storage unit 10d.

In Act 24, the CPU 10a sets the receipt flag. Thereafter, the CPU 10a enters the standby state of Act 19, passing through Act 18.

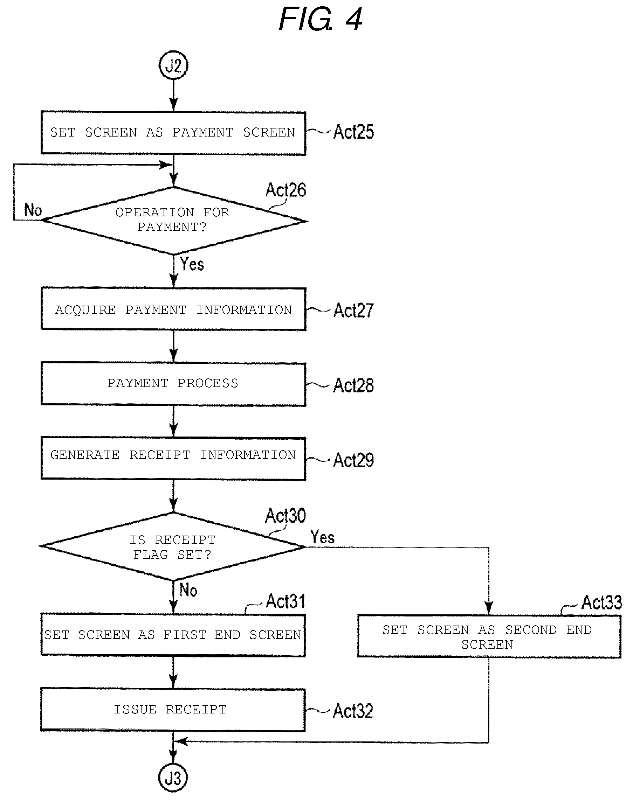

When the screen of the touch panel 10g is the first selection screen or the second selection screen, the operator designates a payment method, by touching a button corresponding to a payment method to be used for payment of the transaction, out of buttons B1 to B3. If such an operation is detected by the touch panel 10g, after the designated payment method is selected, the CPU 10a makes a determination of Yes in Act 19 or Act 22, and proceeds to Act 25 in FIG. 4. In this manner, the computer is controlled by the CPU 10a based on the control program to function as a selection unit that selects a payment method.

In Act 25, the CPU 10a sets the screen on the touch panel 10g as a payment screen. The payment screen is a screen that provides instructions for the input of payment information using the selected payment method. For example, if cash payment is designated as the payment method, the CPU 10a causes the payment screen instruct the insertion of cash.

In Act 26, the CPU 10a checks whether or not the payment operation is performed. If the payment operation is not performed (NO in Act 26), the CPU 10a repeats Act 26. Thus, in Act 26, the CPU 10a waits for the execution of the payment operation. Incidentally, although not illustrated, the CPU 10a also waits for the execution of an operation other than the operation for payment in the standby state. If such an operation is performed, the CPU 10a proceeds to a process (not illustrated) corresponding to the performed operation. For example, the CPU 10a performs the checking similar to Act 10 in the standby state, and may perform similar processes as Act 13 and Act 14 if the user code is acquired.

The shopper performs a payment operation, according to the payment screen. For example, if cash payment is designated, the shopper inserts bills and coins into a bill slot and a coin slot of the automatic change machine 10e. In addition, if credit card payment or prepaid card payment is designated, the shopper inserts a credit card or a prepaid card into an insertion port of the card reader and writer 10i. If one or both of bills and coins are inserted, the automatic change machine 10e counts the inserted bills and coins so as to calculate the inserted amount of money. Further, if the credit card is inserted, the card reader and writer 10i reads the data recorded in the credit card. If a prepaid card is inserted, the card reader and writer 10i reads the data of the balance recorded in the prepaid card.

If the payment operation is performed (YES in Act 26), the CPU 10a proceeds to Act 27.

In Act 27, the CPU 10a acquires the input amount of money obtained by the automatic change machine 10e or the data read by the card reader and writer 10i as described above, as payment information.

In Act 28, the CPU 10a executes the payment process using the payment information. Since the payment process is a similar process as that performed in the existing same type of payment apparatus, the detailed description thereof will be omitted. In this manner, the computer is controlled by the CPU 10a based on the control program to function as a payment unit that performs payment process.

In Act 29, the CPU 10a generates receipt information, and stores the generated receipt information in the RAM 10c or the auxiliary storage unit 10d. The receipt information has, for example, a format such as a text data format. The CPU 10a includes information to be described on the receipt such as a merchandise list out of the payment information, and information indicating the result of the payment process, in the receipt information. The information indicating the result of the payment process includes, for example, information such as the amount of money to be paid, a deposit amount, a change amount, or a payment date and time, if the cash payment is performed. In other words, the receipt information includes various types of information to be described on the receipt, and the particular information included in the receipt information is optional. However, if the user code is stored in the RAM 10c or the auxiliary storage unit 10d, the CPU 10a includes the user code in the receipt information so that the user code can be identified. In this manner, the computer is controlled by the CPU 10a based on the control program to function as a second generation unit.

In Act 30, the CPU 10a checks whether or not the receipt flag is set. If the receipt flag is not set (NO in Act 30), the CPU 10a proceeds to Act 31.

In Act 31, the CPU 10a sets the screen on the touch panel 10g as a first end screen. The first end screen notifies the operator that a receipt sheet is issued.

FIG. 9 is a diagram illustrating an example first end screen SC5.

The first end screen SC5 includes a text message M11, an image IM1, a region R11, and a button B11. The image IM1 represents the state in which the receipt sheet is issued. Various amounts of money indicated in the region R11 is changed depending on each transaction. The first end screen SC5 represents an example of a case where a change is dispensed, in addition to the issue of a receipt sheet. The CPU 10a sets the first end screen in the case where the change is not dispensed as a screen obtained by replacing the text message M11 and the image IM1 with another text message and image according to the fact where the change is not dispensed.

In Act 32, the CPU 10a operates the printer 10h so as to issue a receipt on which the content of a business transaction of this time is printed on the receipt paper according to the receipt information generated in Act 29. In this manner, the computer is controlled by the CPU 10a to function as a printing control unit that controls the printer 10h so as to print a receipt. The function as the printing unit is implemented by the cooperation of the CPU 10a and the printer 10h.

Thereafter, the CPU 10a returns from Act 32 to Act 1 in FIG. 2, for example, in response to the occurrence of a defined event in which the duration in a state of setting the screen on the touch panel 10g as the first end screen exceeds a predetermined time, and repeats the subsequent processes in a manner similar to that described above.

Meanwhile, if the receipt flag is set (YES in Act 30), the CPU 10a proceeds to Act 33.

In Act 33, the CPU 10a sets the screen on the touch panel 10g as a second end screen. The second end screen is a screen for notifying the operator that a receipt sheet is not issued.

FIG. 10 is a diagram illustrating an example second end screen SC6. In addition, in FIG. 10, since the same reference numerals are given to the same elements as those in FIG. 8, a detailed description thereof will be omitted.

The second end screen SC6 includes a text message M21, an image IM11, a region R11, and a button B11. The image IM11 represents the state in which the receipt sheet is not issued. The second end screen SC6 is an example of a case where a change is dispensed. The CPU 10a sets the second end screen in the case where the change is not dispensed as a screen obtained by replacing the text message M21 and the image IM11 with another text message and image according to the fact where the change is not dispensed. The CPU 10a returns from Act 33 to Act 1 in FIG. 2, for example, in response to the occurrence of a defined event in which the duration in a state of setting the screen on the touch panel 10g as the second end screen exceeds a predetermined time, and repeats the subsequent processes in a manner similar to that described above.

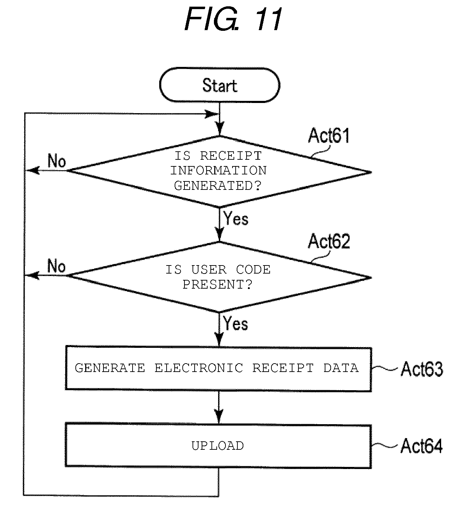

Incidentally, the CPU 10a executes the control process illustrated in FIG. 11, in parallel with the control process illustrated in FIG. 2 to FIG. 4 as described above. The control process illustrated in FIG. 11 is a process for realizing the function as a so-called electronic receipt agent.

In Act 61, the CPU 10a checks whether or not the receipt information is generated in Act 29 of FIG. 4. If the receipt information is not generated (NO in Act 61), the CPU 10a repeats Act 61. Thus, in Act 61, the CPU 10a waits for the generation of the receipt information. If Yes is determined because the receipt information is generated, the CPU 10a proceeds to Act 62.

In Act 62, the CPU 10a checks whether or not the user code is included in the generated receipt information. If the user code is not included in the generated receipt information (NO in Act 62), the CPU 10a returns to the standby state of Act 61. In other words, in Act 61 and Act 62, the CPU 10a waits for the generation of the receipt information including the user code. If the receipt information including the user code is generated (YES in Act 62), the CPU 10a proceeds to Act 63.

In Act 63, the CPU 10a generates electronic receipt data, based on the receipt information that is generated in Act29 and stored in the RAM 10c or the auxiliary storage unit 10d. Specifically, the CPU 10a processes the information that is included in the receipt information, for example, into a structured format such as an extensible markup language (XML) format or a comma-separated values (CSV) format, and generates electronic receipt data by adding other information as necessary. The format in which the electronic receipt data is generated depends on the specification of the electronic receipt service. The CPU 10a stores the generated electronic receipt data in the RAM 10c or the auxiliary storage unit 10d.

In Act 64, the CPU 10a uploads the electronic receipt data that is generated as described above to the receipt server 30. Specifically, the CPU 10a causes the communication unit 10j to execute a process for transferring the electronic receipt data stored in the RAM 10c or the auxiliary storage unit 10d, to the receipt server 30, by using a predetermined communication protocol. Thus, the communication unit 10j is an example of a communication device. In this manner, the computer is controlled by the CPU 10a based on the control program to function as a transmission control unit. The function as the transmission unit is implemented by the cooperation of the CPU 10a and the communication unit 10j.

After the uploading of the electronic receipt data is completed, the CPU 10a returns to the standby state of Act 61, and prepares for the generation of next receipt information.

Thus, if the user code can be acquired before a payment method is designated, the check-out apparatus 10 uploads the electronic receipt data to the receipt server 30, in order to use the electronic receipt service. The operation of designating a payment method is an example of a prescribed operation, and a period while the operation of designating a payment method is performed is an acquisition period. If a user code is not acquired before receiving the designation of a payment method, the check-out apparatus 10 displays the text message The text message M1 is intended to guide the shopper to scan a bar code representing the user code over the scanner 10f, in order to use the electronic receipt service. Therefore, if the shopper wants to use the electronic receipt service but forgets to scan the bar code that represents the user code, with the scanner 10f, it is possible to instruct the shopper through the text message M1. Thus, it is possible to prevent the shopper from forgetting doing an operation for reading the bar code that represents the user code. As a result, it is possible to avoid a situation in which the electronic receipt service is not used which is contrary to the wishes of the shopper.

In addition, a message for guiding the shopper to scan a bar code representing the user code over the scanner 10f may also be included in the registration screen before the acquisition of the user code, such as the registration screen SC1 illustrated in FIG. 5, or the like. However, as in the check-out apparatus 10, it is possible to attract the attention of shoppers by displaying the text message M1 only immediately before the end of the acquisition period, and efficient guidance is possible.

In addition, in the check-out apparatus 10, the above text message is included in the selection screen for selecting a payment method. Therefore, it is not necessary to prepare a new screen for displaying the above text message, and the number of screen transitions does not increase.

This embodiment can be modified in many ways as follows.

The similar process can also be implemented in the check-out apparatus which is operated by a salesperson.

The acquisition of a user code may be input, for example, in response to the operation of the touch panel 10g.

Receipt information in a non-structured format may be generated and uploaded from the check-out apparatus 10 to the receipt server 30. Then, the receipt server 30 may generate electronic receipt data by performing format conversion to a structured format.

The receipt information or the electronic receipt data, and the user code may be separately uploaded from the check-out apparatus 10 to the receipt server 30.

The control process for the payment process illustrated in FIG. 2 through FIG. 4, and the control process for uploading electronic receipt data illustrated in FIG. 11 may be respectively performed in one control process. In this case, the user code may not be included in the payment information.

A guide operation for guiding the shopper to scan a bar code representing the user code over the scanner 10f may be performed at a different timing than that of receiving selection of a payment method. For example, the CPU 10a sets the screen of the touch panel 10g as a screen for the guide operation, prior to setting the first selection screen. The CPU 10a proceeds to Act 23 in FIG. 3, in response to the acquisition of the user code, or the execution of an operation of designating that the electronic receipt service is not to be used, for example, in the touch panel 10g.

The guide operation may be performed, for example, by a method other than visual display of a text message, such as playing of a voice message.

The merchandise is not limited to articles, and may be a service. Thus, the "purchase merchandise" may also refer to a service that is provided from a provider to a receiver.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A check-out apparatus comprising:
a storage unit;
an input unit configured to receive a merchandise code corresponding to merchandise to be purchased in a transaction;
a printer configured to print a receipt;
a communication interface in communication with an electronic receipt management sever; and
a processor, wherein the processor controls the storage unit, the input unit, the printer and the communication interface to perform the following functions:
generate payment information including a payment amount required for the transaction based on one or more received merchandise codes,
acquire a user code corresponding to a user of an electronic receipt service,
perform a payment process based on the payment information and input received from a customer,
generate receipt information including a list of the merchandise purchased in the transaction and information regarding the payment process,
if the user code is not acquired, print a receipt sheet based on the receipt information, and
if the user code is acquired, transmit the user code and the receipt information to the electronic receipt management server which stores the receipt information in association with the user code.

2. The apparatus according to claim 1, further comprising a display unit configured to display a screen that instructs the user to input the user code.

3. The apparatus according to claim 2, wherein the display unit is configured to not display the screen that instructs the user to input the user code when the user code has been acquired.

4. The apparatus according to claim 2 or 3, wherein the display unit is configured to display a screen that informs the user that the receipt sheet will not be printed when the user code has been acquired.

5. The apparatus according to any one of claims 2 to 4, wherein the screen is displayed while a registration process of acquiring one or more merchandise codes is ongoing.

6. The apparatus according to any one of claims 1 to 5, wherein the printer does not print the receipt sheet if the user code is acquired.

7. The apparatus according to any one of claims 1 to 6, further comprising a display unit configured to display a screen that instructs the user to contact the electronic receipt service in communication with the electronic receipt management server to obtain details regarding the transaction.

8. A transaction check-out method comprising the steps of:
receiving at least one merchandise code corresponding to merchandise to be purchased in a transaction;
generating payment information including a payment amount required for the transaction based on the at least one received merchandise code,
performing a payment process based on the payment information and input received from a customer;
determining whether a user code corresponding to a user of an electronic receipt service is acquired;
generating receipt information including a list of the merchandise purchased in the transaction and information regarding the payment process;
controlling distribution of the receipt information to the customer so that:
if the user code is not acquired, a receipt sheet is printed based on the receipt information, and
if the user code is acquired, the user code and the receipt information are transmitted to an electronic receipt management server which stores the receipt information in association with the user code.

9. The method according to claim 8, further comprising the step of:
determining whether to display a screen that instructs the user to input the user code based on whether the user code has been acquired.

10. The method according to claim 9, wherein the screen that instructs the user to input the user code is not displayed when the user code has been acquired.

11. The method according to claim 9 or 10, further comprising the step of:
determining whether to display content that informs the user that the receipt sheet will not be printed based on whether the user code has been acquired.

12. The method according to any one of claims 9 to 11, wherein the screen is displayed while a registration process of acquiring one or more merchandise codes is ongoing.

13. The method according to any one of claims 8 to 12, further comprising the step of:
if the receipt information is transmitted to the electronic receipt management server, displaying a screen that instructs the user to contact an electronic receipt service in communication with the electronic receipt management server to obtain details regarding the transaction.

14. A non-transitory computer readable medium containing computer-executable instructions adapted to cause the computer system to perform a transaction check-out method according to any one of claims 8 to 13.

15. A computer system comprising
a storage means;
an input means configured to receive a merchandise code corresponding to merchandise to be purchased in a transaction;
a printer means configured to print a receipt;
a communication interface means in communication with an electronic receipt management sever; and
a processor means, wherein the processor means controls the storage means, the input means, the printer means and the communication interface means to perform the following functions:
generate payment information including a payment amount required for the transaction based on one or more received merchandise codes,
acquire a user code corresponding to a user of an electronic receipt service,
perform a payment process based on the payment information and input received from a customer,
generate receipt information including a list of the merchandise purchased in the transaction and information regarding the payment process,
if the user code is not acquired, print a receipt sheet based on the receipt information, and
if the user code is acquired, transmit the user code and the receipt information to the electronic receipt management server which stores the receipt information in association with the user code.
